(19) Europäisches Patentamt
European Patent Office
Office européen des brevets

(11) EP 4 796 322 A1

(12) EUROPEAN PATENT APPLICATION
published in accordance with Art. 153(4) EPC

(43) Date of publication:
**26.08.2026 Bulletin 2026/35**

(21) Application number: **24930746.3**

(22) Date of filing: **02.09.2024**

(51) International Patent Classification (IPC):
***B32B 27/36** (2006.01)* ***B32B 7/027** (2019.01)*
***B32B 27/18** (2006.01)* ***B65D 65/40** (2006.01)*
***C08G 63/672** (2006.01)* ***C08G 63/688** (2006.01)*
***C08J 5/18** (2006.01)*

(52) Cooperative Patent Classification (CPC):
**B32B 7/027; B32B 27/18; B32B 27/36; B65D 65/40; C08G 63/672; C08G 63/688; C08J 5/18**

(86) International application number:
**PCT/JP2024/031437**

(87) International publication number:
**WO 2025/197145 (25.09.2025 Gazette 2025/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.03.2024 JP 2024046753**

(71) Applicant: **TOYOBO MC Corporation**
**Osaka-shi, Osaka 530-0001 (JP)**

(72) Inventors:
- **NAGASAKA, Ayame**
  **Inuyama-shi, Aichi 484-8508 (JP)**
- **GOTO, Takamichi**
  **Inuyama-shi, Aichi 484-8508 (JP)**
- **GOSHIMA, Hideto**
  **Otsu-shi, Shiga 520-0292 (JP)**
- **KANDA, Ryosuke**
  **Otsu-shi, Shiga 520-0292 (JP)**

(74) Representative: **Müller-Boré & Partner Patentanwälte PartG mbB**
**Friedenheimer Brücke 21**
**80639 München (DE)**

# (54) LAMINATED FILM AND PACKAGING CONTAINER USING SAME

(57) The present invention provides a laminated film having a heat-sealing layer that exhibits adhesion, easy peelability, anti-fogging, blocking resistance, and migration resistance to an A-PET substrate. The laminated film has two layers: a substrate layer and a heat-sealing layer, wherein (i) thickness of the heat-sealing layer is 1 μm or more and 5 μm or less; (ii) the heat-sealing layer comprises a water-soluble polyester resin (A), a water-soluble polyester resin (B), and inorganic particles (C), wherein Tg of (A) is -15°C or higher and less than 20°C, Tg of (B) is 40°C or higher and 70°C or lower, mass ratio of (A) / (B) is 90/10 to 50/50, and a content of (C) in the heat-sealing layer being 0.6 to 10% by mass; (iii) when 1 μL of distilled water is dropped onto the surface of the heat-sealing layer of the laminated film under conditions of 23°C and 50% R.H., water contact angle, as measured 1 second after the dropping is 30° or higher and 60° or lower; (iv) Tg of the heat-sealing layer is 10°C or higher and 25°C or lower; and (v) haze value of the laminated film is 15% or less.

EP 4 796 322 A1

## Description

### Technical Field

The present invention relates to a laminated film exhibiting anti-fogging property and a packaging container using the same. More specifically, the present invention relates to a laminated film suitable for packaging containers, particularly container lid materials. The laminated film of the present invention exhibits good visibility of the contents by suppressing fogging caused by water vapor generated from the contents, even when the contents are fresh foods such as cut vegetables, salads, and fruits. Also, the laminated film of the present invention exhibits good heat-sealability and openability for A-PET containers.

### Background Art

Aromatic polyesters, typified by polyethylene terephthalate (PET), are widely used as containers for food and beverages. For example, in containers with fitted lids, their excellent transparency and airtightness make them suitable for packaging soups, salads, and fresh vegetables. In recent years, with the aim of reducing plastic waste, top-seal type lids have increasingly replaced the conventional fitted lids.

Furthermore, in response to a recent trend toward monomaterialization, laminated structures in which a heat-sealable polyester-based adhesive composition is applied to a polyester-based film have been considered for use as lid materials for A-PET (amorphous polyethylene terephthalate) packaging containers. There has been a growing demand for polyester-based coating compositions that can be used for food applications and that also exhibit excellent adhesion, easy peelability, anti-fogging property, and anti-blocking property.

For example, Patent Document 1 proposes a composition in which an anti-fogging additive and an anti-blocking agent are added to a blend system of a semicrystalline polyester resin having Tg of -30 to 0°C and an amorphous polyester resin having Tg of 45 to 110°C. Also, Patent Document 2 proposes an anti-fogging coating composition consisting of a polyester resin, a metal compound, and a surfactant.

However, in Patent Document 1, although the resin composition exhibits anti-fogging property and high adhesive strength, blending of anti-fogging additives other than polyester is necessary in order to impart the anti-fogging property. Therefore, there is a problem in terms of recyclability when the resin composition is applied to a A-PET substrate. Furthermore, in Patent Document 2, blending of surfactants in addition to the resin is necessary in order to impart water dispersibility and anti-fogging property. This also leads to a problem in terms of recyclability when the resin composition is applied to a PET substrate. Furthermore, in the above-mentioned prior arts, good anti-fogging property is achieved by bleeding of low molecular weight surfactant components to the surface. This can lead to problems such as sticking to the back surface when unwinding a film wound on a roll (blocking) and surfactant adhering to the back surface (migration to the back). This can cause printing defects or poor adhesion when post-processing such as printing or lamination is performed on the opposite side of the sealed surface.

### Prior Art Documents

### Patent Documents

Patent Document 1: Japanese Patent No. 7280826
Patent Document 2: Japanese Patent Application Laid-Open (JP-A) No. 2023-51805

### Disclosure of the Invention

### Problem that the Invention is to Solve

The present invention has been devised in order to solve the problems of the above-mentioned prior art, and its object is to provide a laminated film having a heat-sealing layer made of water-soluble polyester resins and inorganic particles, wherein the laminated film exhibits excellent adhesion and easy peelability to an A-PET substrate, anti-fogging property, anti-blocking property, and migration resistance, as well as a packaging container using the laminated film.

### Means for Solving the Problem

As a result of intensive studies to achieve the above object, the present inventors have found that, by using water-

soluble polyester resins having different glass transition temperatures in combination, which themselves exhibit excellent water dispersibility and anti-fogging property, it is possible to achieve excellent adhesion to A-PET containers and exhibit anti-fogging property without adding low molecular weight anti-fogging agents. Based on this finding, the present invention has been completed.

That is, the present invention consists of the following configurations (1) to (6).

(1) A laminated film having at least a base layer and a heat-sealing layer, wherein the heat-sealing layer satisfies the following conditions (i) to (iv), and the laminated film satisfies the following condition (v):

(i) thickness of the heat-sealing layer is 1 μm or more and 5 μm or less;
(ii) the heat-sealing layer comprises a water-soluble polyester resin (A), a water-soluble polyester resin (B), and inorganic particles (C), wherein glass transition temperature of the water-soluble polyester resin (A) is - 15°C or higher and less than 20°C, glass transition temperature of the water-soluble polyester resin (B) is 40°C or higher and 70°C or lower, mass ratio of the water-soluble polyester resin (A) to the water-soluble polyester resin (B) is 90/10 to 48/52, and a content of the inorganic particles (C) in the heat-sealing layer is 0.6 to 10% by mass;
(iii) when 1 μL of distilled water is dropped onto the surface of the heat-sealing layer of the laminated film under conditions of 23°C and 50% R.H., water contact angle, as measured 1 second after the dropping, is 30° or higher and 60° or lower;
(iv) glass transition temperature of the heat-sealing layer, as measured by differential scanning calorimetry (DSC), is 10°C or higher and 25°C or lower;
(v) haze value of the laminated film is 15% or less.

(2) The laminated film according to (1), wherein the water-soluble polyester resin (A) satisfies the following conditions (vi) to (vii), and the water-soluble polyester resin (B) satisfies the following conditions (viii) to (ix) :

(vi) in the total polycarboxylic acid components that constitute the water-soluble polyester resin (A), an aromatic polycarboxylic acid component that does not have sulfonic acid group constitutes 60 to 95 mol%, an aromatic polycarboxylic acid component that has a sulfonic acid group constitutes 5 to 20 mol%, and an aliphatic polycarboxylic acid and/or alicyclic dicarboxylic acid component constitutes 3 to 25 mol%;
(vii) in the total polyhydric alcohol components that constitute the water-soluble polyester resin (A), a polyhydric alcohol component that comprises a glycol containing an ether group constitutes more than 50 mol%;
(viii) in the total polycarboxylic acid components that constitute the water-soluble polyester resin (B), an aromatic polycarboxylic acid component that has sodium sulfonate constitutes 1 to 30 mol%;
(ix) number average molecular weight of the water-soluble polyester resin (B) is 10,000 to 30,000.

(3) The laminated film according to (1) or (2), wherein average particle diameter of the inorganic particles (C) is 1 to 30 μm, and pore volume of the inorganic particles (C) is 2 ml/g or less.
(4) The laminated film according to (1) or (2), wherein the base layer is a biaxially oriented polyester film.
(5) A container lid material comprising the laminated film according to (1) or (2) as a component.
(6) A packaging container comprising an A-PET container and the laminated film according to (1) or (2), wherein the laminated film is heat-sealed onto the A-PET container.

Effects of the Invention

The laminated film of the present invention exhibits anti-fogging property, high adhesion and easy peelability to A-PET, while also suppressing occurrence of migration to the back and blocking. For these reasons, the laminated film of the present invention can be suitably used as a heat-sealing layer for recyclable food packaging containers, and exhibits excellent processability.

Mode for Carrying Out the Invention

The embodiments of the present invention will be described in detail below.

The laminated film of the present invention has at least a base layer and a heat-sealing layer, wherein the heat-sealing layer contains at least two types of water-soluble polyester resins, namely a water-soluble polyester resin (A) and a water-soluble polyester resin (B), and inorganic particles (C). Since the heat-sealing layer contains specific water-soluble polyester resin (A) and water-soluble polyester resin (B), the laminated film of the present invention exhibits not only a high level of easy peelability, a wide heat-sealing temperature range, and anti-blocking property, but also excellent anti-fogging property without adding any anti-fogging agent.

<Water-soluble polyester resin (A)>

The water-soluble polyester resin (A) has a chemical structure that can be obtained by polycondensation of a polycarboxylic acid component and a polyhydric alcohol component, wherein the polycarboxylic acid component and the polyhydric alcohol component each consists of one or two or more selected components.

As to the polycarboxylic acid component constituting the water-soluble polyester resin (A), aromatic carboxylic acids, alicyclic polycarboxylic acids and/or aliphatic polycarboxylic acids can be used. Among them, aromatic dicarboxylic acids and aliphatic dicarboxylic acids are preferred.

In the total polycarboxylic acid components, the copolymerization ratio of the aromatic polycarboxylic acid component having no sulfonic acid group is 60 to 95 mol%, preferably 65 to 95 mol%, and more preferably 70 to 90 mol%. When the copolymerization ratio of the aromatic polycarboxylic acid component that does not have a sulfonic acid group is 60 mol% or more, adhesive strength when formed into a coating film may be good. When the copolymerization ratio of the aromatic polycarboxylic acid component that does not have a sulfonic acid group is 95 mol% or less, openability when used as a lid material for a container may be improved.

Examples of the above-mentioned aromatic polycarboxylic acid component include terephthalic acid, isophthalic acid, orthophthalic acid, 2,6-naphthalenedicarboxylic acid, 1,4-naphthalenedicarboxylic acid, 1,8-naphthalenedicarboxylic acid, phenylenedicarboxylic acid, trimellitic acid, pyromellitic acid, benzophenonetetracarboxylic acid, and alkali metal salts thereof. One or more of these can be used. Among these, isophthalic acid is preferred in terms of water dispersibility. Furthermore, in order to suppress gelation during synthesis, the copolymerization ratio of trifunctional or more aromatic polycarboxylic acid component is preferably 3 mol% or less.

In the total polycarboxylic acid components, the copolymerization ratio of aromatic polycarboxylic acid component having a sulfonic acid group is 5 to 20 mol%, and preferably 8 to 20 mol%. When the copolymerization ratio of the aromatic polycarboxylic acid component having a sulfonic acid group is 5 mol% or more, water dispersibility of the resin may be good. When the copolymerization ratio of the aromatic polycarboxylic acid component having a sulfonic acid group is 20 mol% or less, water resistance of the resin may be maintained.

Examples of the aromatic polycarboxylic acid components having a sulfonic acid group include 5-sulfoisophthalic acid, 4-sulfonaphthalene-2,7-dicarboxylic acid, 5-[4-sulfophenoxy]isophthalic acid, and alkali metal salts thereof. One or two or more of these can be used.

In the total polycarboxylic acid components, the copolymerization ratio of the aliphatic polycarboxylic acid component and/or the alicyclic polycarboxylic acid component is 3 to 25 mol%, preferably 4 to 22 mol%, and more preferably 5 to 20 mol%. When the copolymerization ratio of the aliphatic and/or alicyclic polycarboxylic acid component is 25 mol% or less, moisture resistance of the resin may be maintained.

Examples of the aliphatic polycarboxylic acid components include succinic acid, glutaric acid, adipic acid, azelaic acid, sebacic acid, dodecanedioic acid, dimer acid, fumaric acid, maleic acid, itaconic acid, and citraconic acid. Examples of the alicyclic polycarboxylic acid components include 1,4-cyclohexanedicarboxylic acid, tetrahydrophthalic acid, hexahydroisophthalic acid, 1,2-cyclohexenedicarboxylic acid, and 2,5-norbornanedicarboxylic acid. One or two or more of these can be used.

In the total polyhydric alcohol components, the copolymerization ratio of the glycol component containing an ether group, such as diethylene glycol is preferably more than 50 mol%, more preferably 55 mol% or more, still more preferably 60 mol% or more, further preferably 70 mol% or more, and even more preferably 80 mol% or more, and it may even be 100 mol%. When the copolymerization ratio of the glycol component containing an ether group is more than 50 mol%, water dispersibility of the resin is improved. It is preferable, in terms of moisture resistance, that the copolymerization ratio of polyhydric alcohol components other than the glycol component containing an ether group is 50 mol% or less.

Examples of the polyhydric alcohol components other than diethylene glycol include aliphatic glycols such as ethylene glycol, 1,3-propanediol, 2-butyl-2-ethyl-1,3-propanediol, 2-methyl-1,3-propanediol, neopentyl glycol, 3-methyl-1,5-pentanediol, 1,4-butanediol, 2,4-diethyl-1,5-pentanediol, 1,6-hexanediol, 2-methyl-1,8-octanediol, 3-methyl-1,6-hexanediol, 4-methyl-1,7-heptanediol, 4-methyl-1,8-octanediol, and 1,9-nonanediol; alicyclic glycols such as 1,2-cyclohexanedimethanol, 1,3-cyclohexanedimethanol, 1,4-cyclohexanedimethanol, tricyclodecane glycols, and hydrogenated bisphenols; and polyether glycols such as triethylene glycol, polyethylene glycol, polypropylene glycol, and polytetramethylene glycol. One or two or more of these can be used.

Furthermore, for purposes such as increasing an acid value of the water-soluble polyester resin (A), an acid anhydride such as trimellitic anhydride or pyromellitic anhydride may be post-added (post-reacted) after polymerization of the water-soluble polyester resin (A). Specific examples of the acid anhydride for imparting acid value to the polyester resin (A) include trimellitic anhydride, pyromellitic anhydride, and ethylene glycol bisanhydrotrimellitate. One or two or more of these may be used. When the acid anhydride is post-added (post-reacted) after polymerization of the polyester resin (A), the total copolymerization ratio of polycarboxylic acid components and polyhydric alcohol components may exceed 200 mol%. In this case, the total copolymerization ratio of the composition, excluding the components that have been post-added (post-reacted) after polymerization of the polyester resin (A), such as the acid anhydride, is calculated as 200 mol%.

When producing the water-soluble polyester resin (A), various polymerization catalysts can be used, such as titanium compounds including tetra-n-butyl titanate, tetraisopropyl titanate, and titanium oxyacetylacetonate; antimony compounds including antimony trioxide and tributoxyantimony; germanium compounds including germanium oxide and tetra-n-butoxygermanium; and acetates of magnesium, iron, zinc, manganese, cobalt, and aluminum. One or two or more of these catalysts can be used.

The method for producing the water-soluble polyester resin (A) is not particularly limited. Examples thereof include: 1) a method in which a polycarboxylic acid and a polyhydric alcohol are heated in the presence of a catalyst (if any), subjected to a dehydration esterification step, and then to a polycondensation reaction with removal of polyhydric alcohols; and 2) a method in which an alcohol ester of a polycarboxylic acid and a polyhydric alcohol are heated in the presence of a catalyst (if any), subjected to a transesterification reaction, and then to a polycondensation reaction with removal of polyhydric alcohols. In the methods 1) and 2), a part or all of the acid components may be replaced with an acid anhydride.

Glass transition temperature (Tg) of the water-soluble polyester resin (A) is preferably -15°C or higher and less than 20°C, and more preferably -10°C or higher and less than 20°C. When the Tg of the water-soluble polyester resin (A) is less than 20°C, a lid material for a container in which the coating composition according to the present invention is used exhibits improved easy openability. When the Tg of the water-soluble polyester resin (A) is -15°C or higher, blocking is unlikely to occur during preparation of the coating composition of the heat-sealing layer.

Reduced viscosity ($\eta$sp/c) of the polyester resin (A) is preferably 0.30 to 0.70 dl/g. If the reduced viscosity of the polyester resin (A) is at the lower limit of the above range or higher, resin cohesiveness may be improved resulting in excellent adhesion. If the reduced viscosity is at the upper limit of the above range or lower, water dispersibility may be improved. The reduced viscosity can be freely adjusted by changing the polymerization time, temperature, and degree of reduced pressure during polymerization (in the case of reduced pressure polymerization) of the water-soluble polyester resin.

<Water-soluble polyester resin (B)>

The water-soluble polyester resin (B), similarly to the above-mentioned water-soluble polyester resin (A), has a chemical structure that can be obtained by polycondensation of a polycarboxylic acid component and a polyhydric alcohol component, wherein the polycarboxylic acid component and the polyhydric alcohol component each consists of one or two or more selected components.

In the total polycarboxylic acid components that constitute the water-soluble polyester resin (B), an aromatic polycarboxylic acid component that has sodium sulfonate constitutes 1 to 30 mol%. When the copolymerization ratio of the aromatic polycarboxylic acid component having sodium sulfonate is 1 mol% or more, water solubility may be good. When the copolymerization ratio of the aromatic polycarboxylic acid component having sodium sulfonate is 30 mol% or less, water resistance may be good. Examples of the aromatic polycarboxylic acid component that has sodium sulfonate include 5-sulfoisophthalic acid, 4-sulfonaphthalene-2,7-dicarboxylic acid, 5-[4-sulfophenoxy]isophthalic acid, and alkali metal salts thereof.

Number average molecular weight of the water-soluble polyester resin (B) is preferably 10,000 to 30,000, and more preferably 12,000 to 25,000. If the number average molecular weight of the water-soluble polyester resin (B) is less than the above range, strength of the heat-sealing layer may decrease, resulting in reduced heat-seal strength, and the film may become prone to blocking. If the number average molecular weight of the water-soluble polyester resin (B) is more than the above range, viscosity after water dispersion may increase, which may make unevenness more likely to occur during coating.

Glass transition temperature (Tg) of the water-soluble polyester resin (B) of the present invention is preferably 40°C to 70°C, and more preferably 45°C to 65°C. The heat-sealing layer of the present invention achieves both heat-sealability and anti-blocking property by using water-soluble polyester resins having different glass transition temperatures in combination. When the Tg of the water-soluble polyester resin (B) is 40°C or higher, anti-blocking effect caused by a combined use with the water-soluble polyester resin (A) (which has a relatively low Tg) may be enhanced. On the other hand, when the Tg of the water-soluble polyester resin (B) is 70°C or lower, high heat-seal strength caused by a combined use with the water-soluble polyester resin (A) may be obtained.

The water-soluble polyester resin (B) used in the present invention is not particularly limited as long as it satisfies the above-described conditions. Specific examples thereof include commercially available products such as PLAS COAT Z-221 (manufactured by Goo Chemical Co., Ltd.), PLAS COAT Z-446 (manufactured by Goo Chemical Co., Ltd.), PLAS COAT Z-561 (manufactured by Goo Chemical Co., Ltd.), and VYLONAL MD-1480 (manufactured by Toyobo Co., Ltd.).

<Inorganic particles (C)>

The inorganic particles (C) are not particularly limited. Examples thereof include inorganic particles containing oxides, hydroxides, sulfates, carbonates, or silicates of metals such as magnesium, calcium, barium, zinc, zirconium,

molybdenum, silicon, antimony, or titanium. Among these inorganic particles, silica particles are particularly preferred. Shape of the inorganic particles is not particularly limited, and any shape such as powdery, granular, pellet-like, flat plate-like, or needle-like is conceivable.

Average particle size of the inorganic particles (C) is preferably 1 to 30 μm, more preferably 1 to 20 μm, and even more preferably 1 to 12 μm. When the average particle size is 1 μm or more, anti-blocking effect may be achieved. When the average particle size is 30 μm or less, adhesive strength when formed into a coating film may be good.

Pore volume of the inorganic particles (C) is preferably 2 ml/g or less, and more preferably 1 ml/g or less. If the pore volume of the inorganic particles (B) is 2 ml/g or less, the particles may not be destroyed during preparation of the coating composition, and sufficient anti-blocking effect may be achieved.

A content of the inorganic particles (C) of the present invention are preferably 0.6% to 10% by mass of the heat-sealing layer, more preferably 0.7% to 9% by mass, and more preferably 0.8% to 8% by mass. When the content of the inorganic particles (C) is 10% by mass or less, anti-blocking property may be achieved without reducing adhesion.

The lower limit of the thickness of the heat-sealing layer of the present invention is preferably 1 μm, more preferably 1.5 μm, and particularly preferably 2 μm. When the thickness of the heat-sealing layer is at or above the lower limit, anti-fogging property and heat-sealability may be more likely to be exhibited. The upper limit of the thickness of the heat-sealing layer of the present invention is preferably 5 μm, more preferably 4 μm, and particularly preferably 3.5 um. When the thickness of the heat-sealing layer is at or below the upper limit, deterioration in thickness uniformity and blocking in the laminate may be more likely to be suppressed.

The total content of the water-soluble polyester resin (A) and the water-soluble polyester resin (B) in the heat-sealing layer is preferably 60% by mass or more and 99% by mass or less of the heat-sealing layer. Furthermore, the mass ratio of the water-soluble polyester resin (A) to the water-soluble polyester resin (B) in the heat-sealing layer is preferably 90/10 to 48/52, more preferably 85/15 to 50/50, and most preferably 80/20 to 55/45. When the parts by mass of the water-soluble polyester resin (A) are 90 parts by mass or less (i.e. the parts by mass of the water-soluble polyester resin (B) are 10 parts or more by mass), the mass ratio of the resin with low Tg is not too high, and anti-blocking effect may be obtained. On the other hand, when the parts by mass of the water-soluble polyester resin (A) are 48 parts by mass or more (i.e. the parts by mass of the water-soluble polyester resin (B) are 52 parts by mass or less), the Tg of the heat-sealing layer does not become too high, and good heat-seal strength may be obtained.

When 1 μL of distilled water is dropped onto the surface of the heat-sealing layer of the laminated film of the present invention under conditions of 23°C and 50% R.H., the water contact angle of the laminated film of the present invention, as measured 1 second after the dropping is preferably 30° to 60°, more preferably 35° to 60°, and most preferably 40° to 60°. Generally, when a water contact angle on a surface of a heat-sealing layer is small, it is expected that water droplets tend to spread easily, and thus the heat-sealing layer exhibits excellent anti-fogging property. However, the heat-sealing layer of the present invention provides sufficient anti-fogging property even when the water contact angle on its back surface is within the above range. The reason for this is presumed to be as follows. When a conventional low-molecular-weight anti-fogging agents is used, the anti-fogging agent dissolves into the attached water droplets, thereby reducing wettability of the heat-sealing layer. This necessitates addition of a large amount of the anti-fogging agent at an initial stage. Consequently, the water contact angle on the surface of the heat-sealing layer needs to be lowered excessively so as to achieve sufficient anti-fogging property. In contrast, in the present invention, since the polyester resin itself exhibits anti-fogging property without adding any anti-fogging agent, no anti-fogging agent dissolves into the attached water droplets. Consequently, the heat-sealed side can maintain a certain level of hydrophilicity even after water droplets have adhered thereto, whereby sufficient anti-fogging property can be achieved. Furthermore, as described above, the fact that it is not necessary to excessively lower the water contact angle (to increase hydrophilicity) in order to achieve sufficient anti-fogging property also contributes to the improvement of anti-blocking property.

Glass transition temperature (Tg) of the heat-sealing layer of the present invention, as measured by differential scanning calorimetry (DSC), is preferably in the range of 10°C to 25°C, more preferably 11°C to 24°C, and most preferably 13°C to 22°C. When the glass transition temperature (Tg) of the heat-sealing layer is 10°C or higher, anti-blocking effect can be obtained. Furthermore, when the glass transition temperature (Tg) of the heat-sealing layer is 25°C or lower, high heat-seal strength can be obtained.

The heat-sealing layer used in the present invention can be formed by preparing an aqueous coating composition containing the essential components (A), (B), and (C) described above, and applying the prepared aqueous coating composition to a base layer. Preferably, this coating composition contains substantially no curing agent. That is, it is preferable that a content of a curing agent is less than 1 part by mass (solid content basis) relative to 100 parts by mass (solid content basis) of the water-soluble polyester resin (A). By substantially omitting the curing agent, the coating film prepared from the aqueous coating composition (which forms the heat-sealing layer) becomes to be easily recycled.

Here, "curing agent" refers to a known curing agent that reacts with a water-soluble polyester resin so as to form a crosslinked structure. Examples of reactions that form the crosslinked structure include reactions in which unsaturated double bonds in the water-soluble polyester resin undergo radical addition, cationic addition, or anionic addition so as to form intermolecular carbon-carbon bonds, and reactions in which intermolecular bonds are formed through condensation

reactions, polyaddition reactions, transesterification reactions, or similar reactions involving polycarboxylic acid groups or polyhydric alcohol groups in the water-soluble polyester resin. Examples of the curing agent include phenolic resins, amino resins, isocyanate compounds, epoxy compounds, β-hydroxylamide compounds, and resins containing unsaturated bonds.

<Laminated film>

The laminated film of the present invention has at least two layers: a base layer and a heat-sealing layer. Specifically, the heat-sealing layer is laminated on at least one side of a film serving as the base layer. The laminated film of the present invention can be obtained by applying an aqueous coating composition consisting of the necessary components onto a film serving as the base layer, and then performing a drying treatment. Thickness of the heat-sealing layer of the present invention is preferably 1 to 5 μm, and more preferably 2 to 4 μm. When the thickness of the heat-sealing layer is 5 μm or less, blocking may not occur. Haze value of the laminated film of the present invention is preferably 15% or less, and more preferably 12% or less. When the haze value of the laminated film is 15% or less, visibility of the contents may be good in the use as a lid for a container and the like.

The base layer used in the present invention is preferably mainly composed of polyethylene terephthalate-based resin using terephthalic acid as the dicarboxylic acid component and ethylene glycol as the diol component. Here, the term "mainly composed of" means that the content is 50 mol% or more, preferably 80 mol% or more, and more preferably 90 mol% or more, relative to 100 mol% of the total content of all components.

Other dicarboxylic acid components and diol components may be copolymerized as long as they do not hinder the object of the present invention. The upper limit of the copolymerization amount of other dicarboxylic acid components and diol components is preferably 15 mol% or less, more preferably 10 mol% or less, and particularly preferably 5 mol% or less, relative to the total dicarboxylic acid components or diol components, respectively. When the copolymerization amount of dicarboxylic acid components and diol components is at or below the above upper limit, thickness uniformity may be improved, and blocking when stored in roll form may be easily suppressed.

Examples of other dicarboxylic acid components described above include aromatic dicarboxylic acids such as isophthalic acid, phthalic acid, naphthalenedicarboxylic acid, 4,4'-dicarboxybiphenyl, and 5-sodium sulfoisophthalic acid; alicyclic dicarboxylic acids such as 1,4-cyclohexanedicarboxylic acid, 1,3-cyclohexanedicarboxylic acid, 1,2-cyclohexanedicarboxylic acid, 2,5-norbornenedicarboxylic acid, and tetrahydrophthalic acid; and aliphatic dicarboxylic acids such as oxalic acid, malonic acid, succinic acid, adipic acid, azelaic acid, sebacic acid, undecanedioic acid, dodecanedioic acid, octadecanedioic acid, fumaric acid, maleic acid, itaconic acid, mesaconic acid, citraconic acid, and dimer acid.

Examples of other diol components described above include aliphatic diols such as 1,2-propanediol, 1,3-propanediol, 1,2-butanediol, 1,3-butanediol, 1,4-butanediol, 2-methyl-1,3-propanediol, 2-amino-2-ethyl-1,3-propanediol, 2-amino-2-methyl-1,3-propanediol, 1,10-decanediol, dimethylol tricyclodecane, and triethylene glycol; ethylene oxide adducts or propylene oxide adducts of bisphenol A, bisphenol S, bisphenol C, bisphenol Z, bisphenol AP, and 4,4'-biphenol; and alicyclic diols such as 1,2-cyclohexanedimethanol, 1,3-cyclohexanedimethanol, and 1,4-cyclohexanedimethanol.

The base layer used in the present invention is preferably biaxially stretched in order to reduce thickness unevenness. Biaxial stretching can be performed by conventionally known methods, for example, by extruding an unstretched resin sheet onto a cooling drum, then heating it using roll heating, infrared heating, or the like, and stretching the unstretched resin sheet longitudinally so as to form a longitudinally stretched film. This stretching is preferably performed using the difference in peripheral speed of two or more rolls. The longitudinal stretching is usually performed in a temperature range of 50 to 120°C. Furthermore, the ratio of the longitudinal stretching is preferably 3.0 to 4.0 times. When the ratio is 3.0 times or higher, thickness uniformity of the film may be improved, blocking when stored in roll form may be suppressed, and mechanical strength may become sufficiently strong.

The longitudinally stretched film is then subjected to transverse stretching, heat setting, and heat relaxation in this order so as to obtain a biaxially oriented film. The transverse stretching is usually carried out at a temperature range of 60 to 130°C. The ratio of the transverse stretching is preferably 3.0 to 5.0 times. When the ratio is 3.0 times or higher, thickness uniformity of the film may be improved, reduction in anti-fogging property due to transfer of the anti-fogging agent to the back surface when stored in roll form (migration to the back) may be suppressed, and mechanical strength may be sufficiently strong. Furthermore, when the ratio is 5.0 times or lower, breakage during film formation may be suppressed. After the transverse stretching, the heat setting is performed, preferably at a temperature range of 170°C to 240°C. The heat setting time is preferably 1 to 60 seconds. In addition, for applications where reduction in thermal shrinkage rate is required, a relaxation treatment may be carried out as necessary.

The lower limit of the thickness of the base layer used in the present invention is preferably 5 μm, more preferably 10 μm, and particularly preferably 15 μm. When the thickness of the base layer is 5 μm or more, impact strength and tear strength may be maintained. The upper limit of the thickness of the base layer used in the present invention is preferably 100 μm, more preferably 80 μm, and particularly preferably 50 μm. When the thickness of the base layer is 100 μm or less,

the resulting laminated film may be suitably used as a lid material for food containers, and the like.

The thickness unevenness of the base layer used in the present invention is preferably 15% or less, more preferably 10% or less, and particularly preferably 5% or less. When the thickness unevenness of the base layer is at 15% or less, localized winding stress on portions having such thickness unevenness during storage of the laminated film in roll form may be prevented, and as a result, blocking may be suppressed.

A printed layer may be laminated onto the base layer used in the present invention. Water-based and solvent-based resin-containing printing inks are preferred as printing inks for forming the printed layer. Examples of the resins used in printing inks include acrylic-based resins, urethane-based resins, polyester-based resins, vinyl chloride-based resins, vinyl acetate copolymer resins, and mixtures thereof. The printing inks may contain known additives such as antistatic agents, light-shielding agents, ultraviolet absorbers, plasticizers, slip agents, fillers, colorants, stabilizers, lubricants, defoaming agents, crosslinking agents, anti-blocking agents, and antioxidants.

Method for providing the printed layer is not particularly limited, and known printing methods such as offset printing, gravure printing, and screen printing can be used. For drying the solvent after printing, known drying methods such as hot air drying, hot roll drying, and ultraviolet drying can be used.

The base layer used in the present invention may be provided with a gas barrier layer, such as an inorganic thin film layer or a metal layer, as long as it does not impair the object of the present invention. The inorganic thin film layer is preferably made of a metal or an inorganic oxide. The material forming the inorganic thin film layer is not particularly limited as long as it can be formed into a thin film. In terms of gas barrier property, aluminum and inorganic oxides such as silicon dioxide (silica), aluminum oxide (alumina), and mixtures of silicon dioxide and aluminum oxide are preferred. In terms of achieving both flexibility and density in the thin film layer, a composite oxide of silicon dioxide and aluminum oxide is particularly preferred.

## Examples

The present invention will be described in more detail below with reference to Examples. However, the present invention is not limited to Examples. In the Examples and Comparative examples, "parts" refers to parts by mass.

### Measurement of composition of water-soluble polyester resin

The molar ratios of polycarboxylic acid component and polyhydric alcohol component constituting the polyester resin were determined using a 400 MHz $^1$H-nuclear magnetic resonance spectrometer ($^1$H-NMR). Deuterated chloroform was used as the solvent.

### Measurement of glass transition temperature (Tg) of water-soluble polyester resin

The glass transition temperature was measured using a differential scanning calorimetry (DSC) (DSC-220 manufactured by Seiko Instruments Inc.). A sample (water-soluble polyester resin for heat-sealing) (5 mg) was sealed in an aluminum container of a pushing cover type, and the measurement was conducted from -100°C to 250°C at a heating rate of 20°C/min. In an endothermic curve obtained during the measurement, the glass transition temperature was determined as the temperature at the intersection between the extrapolated baseline below the glass transition temperature and the tangent line drawn at the maximum slope from the onset to the apex of the peak.

### Measurement of reduced viscosity (unit: dl/g)

The water-soluble polyester resin was dissolved in phenol/tetrachloroethane (mass ratio: 6/4) at a sample concentration of 0.1 g/25 ml and measured using an Ubbelohde viscometer at a measurement temperature of 30°C.

### Water dispersibility

Each of the polyester resins A-1 to A-8 (210 parts by mass) was mixed with water (490 parts by mass), and the resulting mixture was dissolved by stirring at 80°C. The dispersion state at that time was evaluated according to the following evaluation criteria.

<Evaluation Criteria>

◦◦: The mixture was dispersed in water without leaving any unemulsified material, within 1 hour of stirring. Here,

"unemulsified material" refers to a component that settles after the aqueous dispersion is left to stand at 25°C for 1 day after preparation.
◦: More than 1 hour and up to 3 hours of stirring was required for the mixture to be dispersed in water without leaving any unemulsified material.
×: The mixture failed to be dispersed in water or left unemulsified material, even when stirred for more than 3 hours.

<Average particle diameter of inorganic particles>

The average particle diameter of the inorganic particles was measured using a LA-750 particle size analyzer manufactured by HORIBA. The particle diameter corresponding to 50 mass percent was read, and this value was used as the average particle diameter.

<Pore volume of inorganic particles>

BET nitrogen adsorption isotherm was measured using an AS-1 manufactured by Quantachrome, and the pore volume of the inorganic particles was determined. Specifically, the value determined at a relative pressure of P/P0 = 0.98 was used as the pore volume.

<Preparation of laminated film for evaluation>

The water-soluble polyester resin (A), the water-soluble polyester resin (B), and the inorganic particles (C) were mixed with water as a solvent in the ratios shown in Tables 2 and 3. The resulting mixture was then applied onto a 25 μm-thick biaxially oriented PET film (Toyobo Ester E5102, manufactured by Toyobo Co., Ltd.). The film was then dried at 100°C for 60 seconds so as to obtain a laminated film.

<Thickness of heat-sealing layer>

The thickness of the laminated film (base layer + heat-sealing layer) was measured using an electronic micrometer, the Millitron 1202D, manufactured by Seiko Instruments Inc.. Thereafter, the heat-sealing layer side of the laminated film was completely wiped off with a solvent capable of dissolving the heat-sealing layer. The thickness of the sample after wiping was measured in the same manner, and the thickness of the heat-sealing layer was calculated using the following formula.

Thickness of heat-sealing layer (μm) = Thickness of laminated film (μm) - Thickness of sample after wiping (μm)

<Water contact angle of heat-sealing layer>

Under conditions of 23°C and 50% R.H., the water contact angle on the heat-sealing layer side of the laminated film was measured using a contact angle meter (DSA100S, manufactured by KRUSS). One μl of water was dropped per measurement. The angle formed between the heat-sealing layer and the water droplet was read 1 second after dropping. θ/2 method was used to read the water contact angle. Ten water contact angle measurements were taken for each sample. The average value of the ten measurements was determined as the contact angle of the sample.

<Haze>

In accordance with JIS K7136:2000, the haze of the laminated film was measured using a haze meter (300A, manufactured by Nippon Denshoku Industries Co., Ltd.). The measurement was carried out twice. The average value was calculated and determined as the haze value.

<Glass transition temperature (Tg) of heat-sealing layer>

From each laminated film obtained in the Examples and Comparative Examples described later, only the heat-sealing layer was isolated by being scraped off with a razor blade, and the isolated heat-sealing layer was used as a sample. Using a differential scanning calorimeter (DSC) (DSC8500, manufactured by PerkinElmer) 5 mg of the sample obtained as described above was sealed in an aluminum container of a pushing cover type. The measurement was conducted from -100°C to 250°C at a heating rate of 20°C/min. In an endothermic curve obtained during the measurement, the glass temperature was determined as the temperature at the intersection of the extrapolated baseline below the glass transition temperature and the tangent line showing the maximum slope between the onset of the peak and the peak apex.

<Heat-seal strength>

The coated surface of the laminate film for evaluation was heat-sealed to a 200 μm-thick unstretched A-PET film at a heat-seal temperature of 110°C, 130°C, 150°C, or 180°C, under a pressure of 0.2 MPa for 1 second. Then, a 15 mm-wide test piece was cut out from the resulting structure, and a 180° peel test was conducted using an Autograph AG-Xplus (manufactured by Shimadzu Corporation) at 25°C and at a tensile speed of 200 mm/min so as to measure the heat-seal strength.

<Easy openability>

The heat-sealing layer side of the laminated film for evaluation was placed on an A-PET container. The laminated film was then bonded to the container by heat-sealing. The heat-sealing conditions were a temperature of a predetermined value, a pressure of 0.2 MPa, and a sealing time of 1 second. Thereafter, the laminated film was peeled off by hand and the ease of peeling (easy openability) was evaluated according to the following criteria.

◦◦: The bonding was sufficient. Nevertheless, the film could be peeled off by hand, even with light force.
◦: The bonding was sufficient. Nevertheless, the film could be peeled off by hand.
Δ: The bonding was insufficient, and thus the film could be peeled off without applying any force.
×: The bonding was excessively strong. Accordingly, the film could not be peeled off by hand, or the lid material was damaged during the peeling operation.

<Water resistance>

The laminated film for evaluation was immersed in water at 23°C for 24 hours. After immersion, the heat-sealing layer was rubbed with a finger, and the state of coating removal was visually evaluated according to the following criteria.

◦: No removal of the heat-sealing layer was observed.
×: Removal of the heat-sealing layer was observed.

<Anti-fogging property>

A 30 cm × 30 cm square sample was cut out from the laminated film for evaluation. A plastic container (volume: 500 mL; diameter of opening: approximately 10 cm) was filled with 300 mL of warm water at 50°C. The opening of the plastic container was covered with the sample such that the heat-sealing layer side faced the warm water side so as to prepare an evaluation sample. The opening was sealed with a rubber band. After the evaluation sample was left to stand at 5°C for 30 minutes, water droplets adhering to the lid material (the square sample) were visually evaluated according to the following criteria.

Rank 1: No fogging caused by water droplets was observed, and the entire surface was uniformly transparent.
Rank 2: Fogging caused by water droplets occupied less than 20% of the total opening area.
Rank 3: Fogging caused by water droplets occupied 20% or more and less than 50% of the total opening area.
Rank 4: Fogging caused by water droplets occupied 50% or more and less than 70% of the total opening area.
Rank 5: Fogging caused by water droplets occupied 70% or more of the total opening area.

<Anti-blocking property>

The laminated film for evaluation was cut into a 10 cm square film sample. The coated surface of the film sample was placed against the unprocessed surface of a 10 cm square A-PET film having a thickness of 25 μm, and the two films were heat-pressed at 45°C and 1.5 MPa for 30 seconds. Anti-blocking property was then evaluated by peeling the films apart by hand, and judged according to the following criteria.

◦◦: The films could be peeled apart by hand without any peeling resistance.
◦: Slight peeling resistance was felt, but the films could be peeled apart by hand without any tearing.
Δ: Peeling resistance was felt, and slight tearing occurred when the films were peeled apart by hand.
×: Strong peel resistance was felt, and extensive tearing occurred when the films were subjected to peeling apart.

<Migration resistance>

In the same manner as the above-described anti-blocking property evaluation, the laminated film for evaluation was cut into a 10 cm square film sample. The coated surface of the film sample was placed against the unprocessed surface of a 10 cm square A-PET film having a thickness of 25 μm, and the two films were heat-pressed at 45°C and 1.5 MPa for 30 seconds. Thereafter, the overlapping laminated films were peeled apart, and the anti-fogging property of the base layer side that had been in contact with the heat-sealing layer was evaluated using the same procedure as described above for <Anti-fogging property>, and judged according to the following criteria. For those that received an "×" rating in the anti-blocking property evaluation, this evaluation was not performed because the surface of the base layer could not be exposed due to tearing.

◦◦: The anti-fogging rank of the surface of the base layer side was 5 (no anti-fogging property on the base layer side caused by migration to the back was exhibited).

◦: The anti-fogging rank of the surface of the base layer side was 4.

Δ: The anti-fogging rank of the surface of the base layer side was 3 to 2.

×: The anti-fogging rank of the surface of the base layer side was 1 (anti-fogging property on the base layer side caused by migration to the back was exhibited).

Synthesis of polyester resin (A-1)

In a reaction vessel equipped with a stirrer, a thermometer, a heating device, a cooling device, and a distillation condenser, 373 parts by mass of dimethyl isophthalate, 71 parts by mass of dimethyl 5-sulfoisophthalate, 458 parts by mass of diethylene glycol, and 0.2 part by mass of tetrabutyl titanate were charged. Next, a transesterification reaction was carried out over 3 hours while raising the temperature to 220°C. After that, the temperature was lowered to 150°C, 49 parts by mass of sebacic acid was added, and an esterification reaction was carried out over 4 hours while raising the temperature again to 220°C. After the esterification reaction was completed, the pressure in the system was reduced to 10 torr over 60 minutes while raising the temperature to 270°C. Then, the pressure was further reduced to a vacuum of 1 torr or less, and a polycondensation reaction was carried out at 270°C until a predetermined viscosity was reached. After the polycondensation reaction was completed, the polyester resin was taken out and cooled so as to obtain the polyester resin (A-1). The resin composition and the results of the measurements of resin properties are shown in Table 1.

Synthesis of polyester resins (A-2) to (A-10) and (B-1) to (B-9)

In the same manner as in the synthesis of polyester resin (A-1), polyester resins (A-2) to (A-10) and (B-1) to (B-9) were obtained by changing the types and blending ratios of the raw materials as shown in Table 1. The water-soluble polyester resins (A-7) and (A-8), which exhibited poor water dispersibility, were not evaluated in laminated films because it is difficult to prepare aqueous coating solutions.

Polyester resin (A-9)

In an ester reaction vessel, 445 parts by mass of terephthalic acid, 74 parts by mass of isophthalic acid, 270 parts by mass of sebacic acid, 277 parts by mass of ethylene glycol, 465 parts by mass of 2,2-dimethyl-1,3-propanediol, and 0.5 part by mass of tetrabutyl titanate were charged. Then, a transesterification reaction was carried out over 4 hours while raising the temperature to 230°C. After the transesterification reaction was completed, the pressure was reduced to 10 torr over 60 minutes while the temperature in the system was raised to 250°C, and a polycondensation reaction was carried out at 250°C for 60 minutes. Thereafter, nitrogen was introduced into the system so as to break the vacuum, thereby terminating the polycondensation reaction. After the reaction was completed, the polyester resin was taken out and cooled so as to obtain the polyester resin (A-9). The glass transition temperature of this resin was 7°C.

Table 1 shows the resin compositions and properties of polyester resins (A-1) to (A-9).

[Table 1]

| Polyester resin | | | A-1 | A-2 | A-3 | A-4 | A-5 | A-6 | A-7 | A-8 | A-9 |
|---|---|---|---|---|---|---|---|---|---|---|---|
| Resin composition | polycarboxylic acid (mol%) | terephthalic acid | | 30 | | | | | | | 60 |
| | | isophthalic acid | 80 | 55 | 65 | 65 | 90 | 65 | 82 | 75 | 10 |
| | | sebacic acid | 10 | 5 | 20 | 20 | 0 | 10 | 15 | 10 | 30 |
| | | 5-sulfoisophthalic acid | 10 | 10 | 15 | 15 | 10 | 25 | 3 | 15 | |
| | polyhydric alcohol (mol%) | ethylene glycol | | | | 20 | | | | | 50 |
| | | diethylene glycol | 100 | 100 | 100 | 80 | 100 | 100 | 100 | 40 | |
| | | hexanediol | | | | | | | | 60 | |
| | | 2,2-dimethyl-1,3-propanediol | | | | | | | | | 50 |
| Resin properties | Tg (°C) | | 6 | 14 | -9 | 18 | 28 | 18 | 10 | 10 | 7 |
| | reduced viscosity (dl/g) | | 0.45 | 0.30 | 0.60 | 0.40 | 0.45 | 0.45 | 0.45 | 0.45 | 1 |
| | water dispersibility | | oo | o | oo | oo | oo | oo | × | × | × |

Polyester resin (B-1)

PLAS COAT Z-221 (glass transition temperature: 47°C; pH: 4.5-6.5; molecular weight: 14,000), manufactured by Goo Chemical Co., Ltd., was used as the water-soluble polyester resin (B-1).

Polyester resin (B-2)

PLAS COAT Z-561 (glass transition temperature: 64°C; pH: 5-7; molecular weight: 27,000), manufactured by Goo Chemical Co., Ltd., was used as the water-soluble polyester resin (B-2).

Water-soluble polyester resin (B-3)

The polyester resin (B-3) was obtained in the same manner as the polyester resin (A-9), except that the raw materials were changed to 455 parts by mass of dimethyl terephthalate, 455 parts by mass of dimethyl isophthalate, 291 parts by mass of ethylene glycol, 488 parts by mass of 2,2-dimethyl-1,3-propanediol, and 0.5 part by mass of tetrabutyl titanate. The glass transition temperature of this resin was 67°C.

Silica particles SYLOBLOC S200 (manufactured by W.R. Grace and Co.; powder form; average particle diameter: 3 μm; pore volume: 0.6 ml/g) were used as the inorganic particles (C-1). Silica particles SYLYSIA 780 (manufactured by Fuji Silysia Chemical Ltd.; powder form; average particle diameter: 11 μm; pore volume: 0.4 ml/g) were used as the inorganic particles (C-2).

[Example 1]

In a container, 87% by mass of the polyester resin (A-1), 11% by mass of the polyester resin (B-1), and 2% by mass of the inorganic particles (C-1) were charged. The resulting mixture was then diluted with water so that the solids content became 25%, and stirred at room temperature for 30 minutes. After cooling to room temperature, the mixture was taken out from the container so as to obtain a coating composition for forming a heat-sealing layer. The coating composition obtained above was applied to a biaxially oriented polyester film (Toyobo Ester E5202 manufactured by Toyobo Co., Ltd.; thickness: 25 μm) by wire bar coating method, and then dried at 100°C for 60 seconds so as to obtain a laminated film. The thickness of the coating layer was 3.2 μm.

[Example 2] to [Example 13], [Comparative Example 1] to [Comparative Example 10]

Each laminated film was obtained in the same manner as in Example 1, except that the polyester resin (A), the polyester resin (B), and the inorganic particles (C) were changed as shown in Tables 2 and 3.

[Comparative Example 11]

A coating composition was obtained by heating and stirring 65% by mass of the polyester resin (A-9), 28% by mass of the polyester resin (B-3), 2% by mass of the inorganic particles (C), and 5% by mass of an anti-fogging agent (Rikemal L-71-D, manufactured by Riken Vitamin Co., Ltd.; nonionic surfactant; HLB: 7.3) in an ethyl acetate solution (solids content of 10%). This coating composition was applied to the same biaxially oriented polyester film as used in

Example 1 using the wire bar coating method, and then dried at 90°C for 20 seconds so as to obtain a laminated film. The thickness of the coated layer was 2.0 μm.

Tables 2 and 3 show the composition, physical properties, and evaluation results of various properties of the heat-sealing layers obtained in Examples 1 to 13 and Comparative Examples 1 to 11.

[Table 2]

| | | | Unit | Example 1 | Example 2 | Example 3 | Example 4 | Example 5 | Example 6 | Example 7 |
|---|---|---|---|---|---|---|---|---|---|---|
| Composition of polyester resin | polyester resin (A) | A-1 | % by mass | 87 | 74 | 74 | 74 | 69 | 49 | 74 |
| | | A-2 | % by mass | | | | | | | |
| | | A-3 | % by mass | | | | | | | |
| | | A-4 | % by mass | | | | | | | |
| | polyester resin (B) | B-1 | % by mass | 11 | 24 | 24 | 25 | 23 | 49 | 24 |
| | | B-2 | % by mass | | | | | | | |
| inorganic particles (C) | | C-1 | % by mass | 2 | 2 | | | | 2 | 2 |
| | | C-2 | % by mass | | | 2 | 1 | 8 | | |
| Properties | thickness of heat-sealing layer | | μm | 3.2 | 3.1 | 3.1 | 3.0 | 3.1 | 2.9 | 1.2 |
| | water contact angle of heat-sealing layer | | ° | 57.8 | 56.3 | 56.3 | 56.3 | 56.3 | 54.7 | 56.3 |
| | Tg of heat-sealing layer | | °C | 11.7 | 16.3 | 16.3 | 16.3 | 16.3 | 24.0 | 16.3 |
| | heat-seal strength | 110°C | N/15 mm | 5.5 | 5.0 | 5.0 | 5.1 | 5.0 | 3.9 | 3.1 |
| | | 130°C | N/15 mm | 6.2 | 5.1 | 5.1 | 5.2 | 5.2 | 4.9 | 3.2 |
| | | 150°C | N/15 mm | 6.5 | 6.1 | 6.2 | 6.2 | 6.1 | 5.2 | 3.6 |
| | | 180°C | N/15 mm | 7.0 | 6.0 | 6.1 | 6.2 | 6.2 | 5.8 | 4.1 |
| | haze value | | % | 11.7 | 11.8 | 5.6 | 4.2 | 14.0 | 11.5 | 4.2 |
| | easy openability | | - | o | o | o | o | o | o | o |
| | moisture resistance | | - | o | o | o | o | o | o | o |
| | anti-fogging property | | rank | 1 | 1 | 1 | 1 | 1 | 1 | 1 |
| | anti-blocking property | | - | oo | oo | oo oo | o | oo oo | oo | oo |
| | migration resistance | | - | o | o | oo | oo | oo | o | o |

| | | | Unit | Example 8 | Example 9 | Example 10 | Example 11 | Example 12 | Example 13 |
|---|---|---|---|---|---|---|---|---|---|
| Composition of polyester resin | polyester resin (A) | A-1 | % by mass | 74 | 89 | 74 | | | |
| | | A-2 | % by mass | | | | 74 | | |
| | | A-3 | % by mass | | | | | 49 | |
| | | A-4 | % by mass | | | | | | 79 |
| | polyester resin (B) | B-1 | % by mass | 24 | | | 24 | 49 | 19 |
| | | B-2 | % by mass | | 9 | 24 | | | |
| inorganic particles (C) | | C-1 | % by mass | 2 | 2 | 2 | 2 | 2 | 2 |
| | | C-2 | % by mass | | | | | | |
| Properties | thickness of heat-sealing layer | | μm | 4.9 | 3.0 | 3.1 | 2.9 | 3.1 | 3.0 |
| | water contact angle of heat-sealing layer | | ° | 56.3 | 58.5 | 57.9 | 57.0 | 55.5 | 55.3 |
| | Tg of heat-sealing layer | | °C | 16.3 | 13.4 | 21.8 | 22.3 | 19.0 | 23.8 |
| | heat-seal strength | 110°C | N/15 mm | 8.0 | 4.4 | 4.0 | 3.9 | 4.8 | 3.9 |
| | | 130°C | N/15 mm | 8.1 | 4.9 | 4.1 | 4.9 | 5.1 | 5.0 |
| | | 150°C | N/15 mm | 9.6 | 5.2 | 4.9 | 5.2 | 5.8 | 5.3 |
| | | 180°C | N/15 mm | 9.5 | 5.6 | 4.8 | 5.8 | 5.9 | 6.1 |
| | haze value | | % | 14.2 | 11.5 | 11.7 | 11.3 | 11.5 | 11.6 |
| | easy openability | | - | o | o | o | o | o | o |
| | moisture resistance | | - | o | o | o | o | o | o |
| | anti-fogging property | | rank | 1 | 2 | 2 | 1 | 1 | 1 |
| | anti-blocking property | | - | o | oo | oo | oo | oo | oo |
| | migration resistance | | - | o | o | o | o | o | o |

[Table 3]

| | | | Unit | Comparative Example 1 | Comparative Example 2 | Comparative Example 3 | Comparative Example 4 | Comparative Example 5 | Comparative Example 6 |
|---|---|---|---|---|---|---|---|---|---|
| Composition of polyester resin | water-soluble polyester resin (A) | A-1 | % by mass | 74 | 74 | 90 | 92 | 39 | 39 |
| | | A-5 | % by mass | | | | | | |
| | | A-6 | % by mass | | | | | | |
| | | A-9 | % by mass | | | | | | |
| | water-soluble polyester resin (B) | B-1 | % by mass | 24 | 24 | 8 | | 59 | |
| | | B-2 | % by mass | | | | 6 | | 59 |
| | | B-3 | % by mass | | | | | | |
| inorganic particles (C) | | C-1 | % by mass | 2 | 2 | 2 | 2 | 2 | 2 |
| | | C-2 | % by mass | | | | | | |
| anti-fogging additive | | | % by mass | | | | | | |
| Properties | thickness of heat-sealing layer | | μm | 0.6 | 7.1 | 3.0 | 3.1 | 2.9 | 2.9 |
| | water contact angle of heat-sealing layer | | ° | 56.3 | 56.3 | 58.1 | 59.1 | 52.5 | 57 |
| | Tg of heat-sealing layer | | °C | 16.3 | 16.3 | 8.5 | 8.3 | 31.3 | 35.9 |
| | heat-seal strength | 110°C | N/15 mm | 1.9 | 14.3 | 5.6 | 4.5 | 0.2 | 0.1 |
| | | 130°C | N/15 mm | 1.9 | 14.5 | 6.4 | 5.1 | 2.7 | 1.3 |
| | | 150°C | N/15 mm | 2.2 | 17.3 | 6.8 | 5.4 | 1.7 | 0.9 |
| | | 180°C | N/15 mm | 2.5 | 17.1 | 7.1 | 5.8 | 3.5 | 1.8 |
| | haze value | | % | 3.9 | 16.2 | 11.5 | 11.7 | 11.5 | 11.6 |
| | easy openability | | - | o | × | o | o | o | oo |
| | water resistance | | - | o | o | o | o | o | o |
| | anti-fogging property | | rank | 1 | 1 | 2 | 2 | 1 | 1 |
| | anti-blocking property | | - | oo | × | Δ | Δ | oo | oo |
| | migration resistance | | - | o | - | o | o | o | o |

| | | | Unit | Comparative Example 7 | Comparative Example 8 | Comparative Example 9 | Comparative Example 10 | Comparative Example 11 |
|---|---|---|---|---|---|---|---|---|
| Composition of polyester resin | water-soluble polyester resin (A) | A-1 | % by mass | | | 74.6 | 66.75 | |
| | | A-5 | % by mass | 98 | | | | |
| | | A-6 | % by mass | | 98 | | | |
| | | A-9 | % by mass | | | | | 65 |
| | water-soluble polyester resin (B) | B-1 | % by mass | | | 24.9 | 22.25 | |
| | | B-2 | % by mass | | | | | |
| | | B-3 | % by mass | | | | | 28 |
| inorganic particles (C) | | C-1 | % by mass | 2 | 2 | | | 2 |
| | | C-2 | % by mass | | | 0.5 | 11 | |
| anti-fogging additive | | | % by mass | | | | | 5 |
| Properties | thickness of heat-sealing layer | | μm | 3 | 3.1 | 3.0 | 3.1 | 2 |
| | water contact angle of heat-sealing layer | | ° | 56.5 | 28 | 56.3 | 56.3 | 20 |
| | Tg of heat-sealing layer | | °C | 28 | 18 | 16.3 | 16.3 | 17 |
| | heat-seal strength | 110°C | N/15 mm | 2.0 | 4.9 | 5.1 | 4.8 | 3.4 |
| | | 130°C | N/15 mm | 2.0 | 5.1 | 5.2 | 4.9 | 3.4 |
| | | 150°C | N/15 mm | 2.4 | 6.0 | 6.2 | 5.6 | 3.8 |
| | | 180°C | N/15 mm | 2.4 | 6.9 | 6.3 | 5.9 | 4.7 |
| | haze value | | % | 11.3 | 11.5 | 3.2 | 19.0 | 9.5 |
| | easy openability | | - | o | o | o | o | oo |
| | water resistance | | - | o | × | o | o | o |
| | anti-fogging property | | rank | 1 | 1 | 1 | 1 | 1 |
| | anti-blocking property | | - | o | o | Δ | oo oo | Δ |
| | migration resistance | | - | o | o | oo | oo | × |

As is clear from Table 1, in the polyester resins A-1 to A-6, the ratio of the polycarboxylic acid component was within the favorable range, resulting in sufficient water dispersibility. However, in the polyester resin A-7, the ratio of the polycarboxylic acid component was outside the favorable range, resulting in poor water dispersibility. In the polyester resin

A-8, the ratio of the glycol component was outside the favorable range, resulting in poor water dispersibility. In the polyester resin A-9, no aromatic polycarboxylic acid component having a sulfonic acid group was included, and thus the polyester resin did not disperse in water.

Furthermore, as is clear from Table 2, all of the laminated films of Examples 1 to 13 exhibited excellent heat-seal strength and anti-fogging property, and also had easy openability, moisture resistance, and anti-blocking property. In addition, migration to the back was improved.

On the other hand, in Comparative Example 1, the heat-seal strength was reduced because the thickness of the heat-sealing layer was thin. In Comparative Example 2, the heat-seal strength was too high because the thickness of the heat-sealing layer was thick, resulting in poor easy openability.

In Comparative Examples 3 and 4, the low proportion of the water-soluble polyester resin (B) resulted in a low Tg of the heat-sealing layer, slightly worsening anti-blocking property compared to the laminated film with the resin composition ratio of the present invention. In Comparative Examples 5 and 6, the high proportion of the water-soluble polyester resin (B) resulted in an excessively high Tg of the heat-sealing layer, reducing the heat-seal strength.

In Comparative Example 7, the heat-seal strength was reduced because the Tg of the water-soluble polyester resin A-5 used was high.

In Comparative Example 8, the proportion of the aromatic polycarboxylic acid component having a sulfonic acid group in the water-soluble polyester resin A-6 used was high, resulting in excessive water solubility of the resin and consequently reduced water resistance.

In Comparative Example 9, the low amount of inorganic particles added resulted in poor anti-blocking property. In Comparative Example 10, the high amount of inorganic particles added resulted in high haze value and poor transparency.

In Comparative Example 11, instead of using a water-soluble polyester resin, an anti-fogging agent was added. Due to the addition of a low molecular weight anti-fogging agent, sufficient performance in terms of anti-blocking property and migration resistance could not be obtained.

Industrial Applicability

The laminated film according to the present invention is a laminated film that combines excellent adhesion easy openability to A-PET base materials, anti-fogging property, anti-blocking property, and migration resistance. Therefore, even when fresh foods such as cut vegetables, salads, and fruits are used as contents, fogging caused by water vapor generated from the contents can be suppressed, resulting in good visibility of the contents. Accordingly, the laminated film according to the present invention has a potential for wide industrial use. Furthermore, laminated film according to the present invention has excellent recyclability when applied to PET substrates. Accordingly, it is expected that using packaging containers with the laminated film of the present invention as a lid material can contribute to reducing plastic waste and promoting monomaterialization.

## Claims

**1.** A laminated film having at least a base layer and a heat-sealing layer, wherein the heat-sealing layer satisfies the following conditions (i) to (iv), and the laminated film satisfies the following condition (v):

(i) thickness of the heat-sealing layer is 1 μm or more and 5 μm or less;
(ii) the heat-sealing layer comprises a water-soluble polyester resin (A), a water-soluble polyester resin (B), and inorganic particles (C), wherein glass transition temperature of the water-soluble polyester resin (A) is -15°C or higher and less than 20°C, glass transition temperature of the water-soluble polyester resin (B) is 40°C or higher and 70°C or lower, mass ratio of the water-soluble polyester resin (A) to the water-soluble polyester resin (B) is 90/10 to 48/52, and a content of the inorganic particles (C) in the heat-sealing layer is 0.6 to 10% by mass;
(iii) when 1 μL of distilled water is dropped onto the surface of the heat-sealing layer of the laminated film under conditions of 23°C and 50% R.H., water contact angle, as measured 1 second after the dropping, is 30° or higher and 60° or lower;
(iv) glass transition temperature of the heat-sealing layer, as measured by differential scanning calorimetry (DSC), is 10°C or higher and 25°C or lower;
(v) haze value of the laminated film is 15% or less.

**2.** The laminated film according to claim 1, wherein the water-soluble polyester resin (A) satisfies the following conditions (vi) to (vii), and the water-soluble polyester resin (B) satisfies the following conditions (viii) to (ix):

(vi) in the total polycarboxylic acid components that constitute the water-soluble polyester resin (A), an aromatic

polycarboxylic acid component that does not have sulfonic acid group constitutes 60 to 95 mol%, an aromatic polycarboxylic acid component that has a sulfonic acid group constitutes 5 to 20 mol%, and an aliphatic polycarboxylic acid and/or alicyclic dicarboxylic acid component constitutes 3 to 25 mol%;
(vii) in the total polyhydric alcohol components that constitute the water-soluble polyester resin (A), a polyhydric alcohol component that comprises a glycol containing an ether group constitutes more than 50 mol%;
(viii) in the total polycarboxylic acid components that constitute the water-soluble polyester resin (B), an aromatic polycarboxylic acid component that has sodium sulfonate constitutes 1 to 30 mol%;
(ix) number average molecular weight of the water-soluble polyester resin (B) is 10,000 to 30,000.

**3.** The laminated film according to claim 1 or 2, wherein average particle diameter of the inorganic particles (C) is 1 to 30 μm, and pore volume of the inorganic particles (C) is 2 ml/g or less.

**4.** The laminated film according to claim 1 or 2, wherein the base layer is a biaxially oriented polyester film.

**5.** A container lid material comprising the laminated film according to claim 1 or 2 as a component.

**6.** A packaging container comprising an A-PET container and the laminated film according to claim 1 or 2, wherein the laminated film is heat-sealed onto the A-PET container.

**INTERNATIONAL SEARCH REPORT**

International application No. **PCT/JP2024/031437**

**A. CLASSIFICATION OF SUBJECT MATTER**

***B32B 27/36***(2006.01)i; ***B32B 7/027***(2019.01)i; ***B32B 27/18***(2006.01)i; ***B65D 65/40***(2006.01)i; ***C08G 63/672***(2006.01)i; ***C08G 63/688***(2006.01)i; ***C08J 5/18***(2006.01)i

FI: B32B27/36; B32B27/18 Z; B32B7/027; B65D65/40 D; C08G63/688; C08G63/672; C08J5/18 CFD

According to International Patent Classification (IPC) or to both national classification and IPC

**B. FIELDS SEARCHED**

Minimum documentation searched (classification system followed by classification symbols)

B32B1/00-43/00; B65D65/00-65/46; C08G63/00-64/42; C08J5/00-5/02; 5/12-5/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/145408 A1 (TOYOBO CO., LTD.) 03 August 2023 (2023-08-03) entire text, all drawings | 1-6 |
| A | WO 2022/202832 A1 (TOYOBO CO., LTD.) 29 September 2022 (2022-09-29) entire text, all drawings | 1-6 |
| A | WO 2015/045633 A1 (TOYOBO CO., LTD.) 02 April 2015 (2015-04-02) entire text, all drawings | 1-6 |
| A | US 2007/0087188 A1 (KONRAD, Matthias) 19 April 2007 (2007-04-19) entire text, all drawings | 1-6 |
| A | JP 2022-53354 A (TOYO SEIKAN KAISHA LTD.) 05 April 2022 (2022-04-05) entire text, all drawings | 1-6 |
| A | JP 10-97191 A (TORAY INDUSTRIES, INC.) 14 April 1998 (1998-04-14) entire text, all drawings | 1-6 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/031437**

**C. DOCUMENTS CONSIDERED TO BE RELEVANT**

| Category* | Citation of document, with indication, where appropriate, of the relevant passages | Relevant to claim No. |
|---|---|---|
| A | JP 8-231744 A (TEIJIN LIMITED) 10 September 1996 (1996-09-10) entire text, all drawings | 1-6 |
| A | JP 5-310977 A (TORAY INDUSTRIES, INC.) 22 November 1993 (1993-11-22) entire text, all drawings | 1-6 |

Form PCT/ISA/210 (second sheet) (July 2022)

## INTERNATIONAL SEARCH REPORT
**Information on patent family members**

International application No. **PCT/JP2024/031437**

| Patent document cited in search report | Publication date (day/month/year) | Patent family member(s) | Publication date (day/month/year) |
|---|---|---|---|
| WO 2023/145408 A1 | 03 August 2023 | TW 202335855 A | |
| WO 2022/202832 A1 | 29 September 2022 | US 2024/0174798 A1<br>entire text, all drawings<br>EP 4316837 A1<br>CN 117157343 A<br>TW 202248277 A | |
| WO 2015/045633 A1 | 02 April 2015 | (Family: none) | |
| US 2007/0087188 A1 | 19 April 2007 | EP 1777251 A1<br>DE 102005049639 A | |
| JP 2022-53354 A | 05 April 2022 | (Family: none) | |
| JP 10-97191 A | 14 April 1998 | (Family: none) | |
| JP 8-231744 A | 10 September 1996 | US 5958552 A<br>entire text, all drawings<br>EP 728801 A2<br>TW 420701 B<br>KR 10-1996-0031139 A | |
| JP 5-310977 A | 22 November 1993 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7280826 B
- JP 2023051805 A